# EUROPÄISCHE PATENTSCHRIFT

(11) **EP 3 548 337 B1**
(45) Veröffentlichungstag und Bekanntmachung des Hinweises auf die Patenterteilung: **08.04.2020**
(21) Anmeldenummer: 18707283.0
(22) Anmeldetag: 13.02.2018
(51) Int. Cl.: B60Q 1/14

(54) **STEUERN EINES SCHEINWERFERS EINES KRAFTFAHRZEUGES**
CONTROLLING A HEADLIGHT OF A MOTOR VEHICLE
COMMANDE D'UN PHARE DE VÉHICULE AUTOMOBILE

(30) Priorität: 15.02.2017 DE 102017202466
(43) Veröffentlichungstag der Anmeldung: 09.10.2019
(73) Patentinhaber: Audi AG, 85045 Ingolstadt (DE)
(72) Erfinder: OMERBEGOVIC, Said, 65933 Frankfurt (DE)
(86) Internationale Anmeldenummer: PCT/EP2018/053504
(87) Internationale Veröffentlichungsnummer: WO 2018/149807

(56) Entgegenhaltungen:
- EP-A1- 3 088 249
- DE-A1-102008 025 808
- DE-A1-102012 106 502
- DE-A1-102012 109 068
- JP-B2- 5 938 276

## Beschreibung

Die Erfindung betrifft ein Verfahren zum Steuern eines Scheinwerfers eines Kraftfahrzeugs, bei dem mittels des Scheinwerfers bei einer aktivierten Fernlichtfunktion Licht gemäß einer einem Fernlicht entsprechenden Lichtverteilung abgegeben wird, wobei mittels eines Objektsensors ein Objekt in einem Bereich der Lichtabgabe erfasst wird, mittels einer Auswerteeinheit ermittelt wird, ob das Objekt ein Verkehrsteilnehmer ist, und, nur wenn das Objekt ein Verkehrsteilnehmer ist, die Lichtabgabe in einem Objektbereich des Objekts reduziert wird. Darüber hinaus betrifft die Erfindung eine Vorrichtung zum Steuern eines Scheinwerfers eines Kraftfahrzeugs, wobei die Vorrichtung ausgebildet ist, ein Steuersignal für den Scheinwerfer bereitzustellen, damit der Scheinwerfer bei einer aktivierten Fernlichtfunktion Licht gemäß einer einem Fernlicht entsprechenden Lichtverteilung abgibt, wobei die Vorrichtung ferner ausgebildet ist, mittels eines Sensorsignals eines Objektsensors ein Objekt in einem Bereich der Lichtabgabe zu erfassen, mittels einer Auswerteeinheit zu ermitteln, ob das Objekt ein Verkehrsteilnehmer ist, und, nur wenn das Objekt ein Verkehrsteilnehmer ist, ein Steuersignal an den Scheinwerfer abzugeben, um die Lichtabgabe in einem Objektbereich des Objekts zu reduzieren. Die Erfindung betrifft ferner ein Fahrerassistenzsystem für ein Kraftfahrzeug sowie ein Kraftfahrzeug.

Gattungsgemäße Verfahren, Vorrichtungen, diese gattungsgemäßen Verfahren ausführen, Fahrerassistenzsysteme sowie Kraftfahrzeuge sind dem Grunde nach im Stand der Technik umfänglich bekannt. Insbesondere bei Nachtfahrten kann von einem Fahrer des Kraftfahrzeugs eine Fernlichtfunktion aktiviert werden, um einen zu befahrenden Bereich eines Verkehrswegs in Fahrtrichtung vor dem Kraftfahrzeug verbessert ausleuchten zu können, beispielsweise um in der Dunkelheit schwer erkennbare Hindernisse rechtzeitig erfassen zu können. Zu diesem Zweck kann die Fernlichtfunktion manuell aktiviert werden.

Befinden sich im ausgeleuchteten Bereich andere Verkehrsteilnehmer, so können diese durch das Licht, was von den Kraftfahrzeugscheinwerfern gemäß einer Lichtverteilung für Fernlicht abgegeben wird, geblendet werden. Das Blenden von anderen Verkehrsteilnehmern soll jedoch grundsätzlich vermieden werden, weshalb die Fernlichtfunktion in einem solchen Fall deaktiviert werden soll, indem die Fernlichtfunktion durch den Fahrer des Kraftfahrzeugs manuell deaktiviert wird.

Moderne Kraftfahrzeuge weisen zunehmend einstellbare Scheinwerfer auf, die es ermöglichen, als andere Verkehrsteilnehmer erkannte Objekte bei aktivierter Fernlichtfunktion automatisiert auszublenden beziehungsweise zu entblenden. Zu diesem Zweck kann eine Scheinwerfersteuerung vorgesehen sein, die unter Nutzung einer Objekterkennung und Auswertung den Scheinwerfer in geeigneter Weise ansteuert.

Ein Scheinwerfer, wie er zuvor beschrieben worden ist, liegt auch der Lehre der WO 2015/117 604 A1 zugrunde. Diese offenbart ein Fahrerassistenzsystem mit einer Fernlichtsteuerung die Kamerasensoren nutzt, um Lichter von vorrausfahrenden oder entgegenkommenden Kraftfahrtzeugen zu erkennen. Besteht die Gefahr einer Blendung anderer auf diese Weise erkannter Verkehrsteilnehmer, wird das Fernlicht entweder ausgeschaltet oder adaptiv so gesteuert, dass keine Blendung eintreten kann. Die Erkennung von vorausfahrenden oder entgegenkommenden Kraftfahrzeugen wird mittels unterschiedlicher Objektsensoren realisiert. Um dem Fahrer zu signalisieren, dass ein Objekt im Lichtkegel des Fernlichts ausgespart ist, wird ein akustisches, ein visuelles oder ein haptisches Signal an den Fahrer ausgegeben.

Die DE 10 2015 005 587 A1 offenbart eine Visualisierung eines Beleuchtungsbereichs, um dem Fahrer bei einer aktivierten Fernlichtfunktion den tatsächlich ausgeleuchteten Bereich anzuzeigen. Zu diesem Zweck wird ein kraftfahrzeuginterner Bildschirm im Bereich des Fahrers des Kraftfahrzeuges genutzt, um eine entsprechende Anzeige zu realisieren. Ebenso offenbart die DE 10 2009 031 087 A1 eine Anzeigeoberfläche zur Anzeige eines Scheinwerferstatus in einem Kraftfahrzeug. Ferner offenbart die DE 10 2014 113 478 A1 eine Beleuchtungsvorrichtung eines Kraftfahrzeugs und ein Verfahren zum Betreiben der Beleuchtungsvorrichtung. Schließlich offenbart die EP 3 088 249 A1 ein Verfahren zum Betreiben einer Scheinwerfereinrichtung sowie eine Scheinwerfereinrichtung eines Kraftfahrzeugs.

Auch wenn sich der Stand der Technik bewährt hat, so besteht weiterhin Verbesserungsbedarf. Der Stand der Technik bezieht sich insbesondere auf eine Anzeigefunktion, die eine entsprechende Anzeige innerhalb des Kraftfahrzeugs auf einen kraftfahrzeuginternen Bildschirm ermöglicht. Hierzu ist es erforderlich, dass der Fahrer den Bildschirm permanent im Blick behält, um die Information zu erhalten, dass das Fernlicht bezüglich des weiteren Verkehrsteilnehmers entblendet wurde. Dies lenkt den Fahrer vom eigentlichen führen des Kraftfahrzeuges ab und ist deshalb ungünstig.

Der Erfindung liegt somit die Aufgabe zugrunde, die Funktion des Ausblendens beziehungsweise Entblendens von weiteren Verkehrsteilnehmern bei einer aktivierten Fernlichtfunktion des Kraftfahrzeuges insbesondere für den Fahrer weiter zu verbessern.

Als Lösung werden mit der Erfindung ein Verfahren, eine Vorrichtung, ein Fahrerassistenzsystem sowie ein Kraftfahrzeug gemäß den unabhängigen Ansprüchen vorgeschlagen.

Die Merkmale der abhängigen Ansprüche betreffen vorteilhafte Weiterbildungen.

Bezüglich eines gattungsgemäßen Verfahrens wird insbesondere vorgeschlagen, dass zum Reduzieren der Lichtabgabe im Objektbereich des Objekts eine Breite des Objektbereichs ermittelt wird, zwei parallele Seitenlinien mittig in Bezug auf die Breite ermittelt werden, die Seitenlinien entgegengesetzt zueinander und quer zu ihrer Erstreckung nach außen bis zu einem vorgebbaren Maximalabstand der Seitenlinien voneinander bewegt werden, wobei der Maximalabstand (20) größer als die Breite des Objektbereichs ist, nach Erreichen des Maximalabstands die Seitenlinien entgegengesetzt aufeinander zu bewegt werden, bis die Seitenlinien die Breite des Objektbereichs erreichen, und der Scheinwerfer derart gesteuert wird, dass die Lichtabgabe in einem durch die Seitenlinien seitlich begrenzten Bereich reduziert wird.

Bezüglich einer gattungsgemäßen Vorrichtung wird insbesondere vorgeschlagen, dass die Vorrichtung weiterhin ausgebildet ist, zum Reduzieren der Lichtabgabe im Objektbereich des Objekts eine Breite des Objektbereichs zu ermitteln, zwei parallele Seitenlinien mittig in Bezug auf die Breite zu ermitteln, die Seitenlinien entgegengesetzt zueinander und quer zu ihrer Erstreckung nach außen bis zu einem vorgebbaren Maximalabstand der Seitenlinien voneinander zu bewegen, wobei der Maximalabstand größer als die Breite des Objektbereichs ist, nach Erreichen des Maximalabstands die Seitenlinien entgegengesetzt aufeinander zuzubewegen, bis die Seitenlinien die Breite des Objektbereichs erreichen, und den Scheinwerfer mittels des Steuersignals derart zu steuern, dass in einem durch die Seitenlinien seitlich begrenzten Bereich die Lichtabgabe reduziert ist.

Bezüglich eines gattungsgemäßen Fahrerassistenzsystems wird insbesondere vorgeschlagen, dass dieses eine Vorrichtung gemäß der Erfindung umfasst.

Bezüglich eines gattungsgemäßen Kraftfahrzeuges wird insbesondere vorgeschlagen, dass diese eine Vorrichtung gemäß der Erfindung oder ein Fahrerassistenzsystem gemäß der Erfindung aufweist.

Die Erfindung basiert auf der Idee, bei Erkennen eines weiteren Verkehrsteilnehmers das Ausblenden beziehungsweise Entblenden des Verkehrsteilnehmers bei einer aktivierten Fernlichtfunktion des Kraftfahrzeuges mit einem Effekt zu versehen, der für den Fahrer des Kraftfahrzeuges visuell erkennbar ist, wodurch der Fahrer des Kraftfahrzeuges die Information erhält, dass die Funktion des Entblendens beziehungsweise des Ausblendens bei aktivierter Fernlichtfunktion ebenfalls aktiviert ist und funktioniert. Der Fahrer des Kraftfahrzeuges braucht sich also nicht auf irgendwelche weiteren Anzeigen im Bereich des Kraftfahrzeuges, insbesondere des Cockpits des Kraftfahrzeuges, zu konzentrieren und kann seine Aufmerksamkeit im Wesentlichen auf das Führen des Kraftfahrzeuges im bestimmungsgemäßen Fahrtbetrieb richten. Er braucht also - entgegen dem Stand der Technik - nicht permanent einen Bildschirm aufmerksam im Auge zu behalten, sondern er kann seine Konzentration vollständig auf die Verkehrssituation richten. Durch den Effekt zum Ausblenden beziehungsweise Entblenden der weiteren Verkehrsteilnehmer bekommt der Fahrer somit automatisch die funktionelle Wirkung der Entblendungsfunktion beziehungsweise Ausblendungsfunktion mit. Es bedarf also keiner weiteren fahrzeuginternen Anzeigeeinrichtungen, die die entsprechende Funktionalität darstellen. Diese können im Übrigen eingespart werden.

Mit der Erfindung wird erreicht, dass der Fahrer auch unter ungünstigen Umständen während des Führens des Kraftfahrzeuges im bestimmungsgemäßen Fahrtbetrieb die Entblendung beziehungsweise Ausblendung bei aktivierter Fernlichtfunktion gegenüber einem vollen, nicht entblendbaren beziehungsweise nicht ausblendbaren Fernlicht zu unterscheiden vermag, weil das Ausblenden beziehungsweise Entblenden unmittelbar visuell erlebbar ist. Der Fahrer des Kraftfahrzeuges braucht deshalb nicht zu befürchten, dass andere Verkehrsteilnehmer geblendet werden. Insofern besteht für den Fahrer des Kraftfahrzeuges auch keine Veranlassung, die Fernlichtfunktion vollständig zu deaktivieren. Die Sicherheit bezüglich des Führens des Kraftfahrzeuges kann dadurch deutlich verbessert werden.

Die Aktivierung des Ausblendens beziehungsweise des Entblendens bei aktivierter Fernlichtfunktion ist für den Fahrer somit ersichtlich. Er weiß, dass die Funktion aktiviert ist und andere Verkehrsteilnehmer bedarfsgerecht ausgeblendet beziehungsweise entblendet werden. Daraufhin braucht er die Fernlichtfunktion nicht abzuwerfen.

Das blendfreie Fernlicht beziehungsweise das Ausblenden beziehungsweise Entblenden kann auf der Erkennung anderer Verkehrsteilnehmer durch einen Sensor, nämlich einem Objektsensor basieren, der beispielsweise eine Kamera oder dergleichen aufweisen kann. Vorzugsweise werden entsprechende Daten von dem Objektsensor, insbesondere der Kamera, an eine Auswerteinheit, beispielsweise ein Verarbeitungssteuergerät für Lichtfunktionen, insbesondere eine Scheinwerfersteuerfunktion übertragen, beispielsweise über eine Kommunikationsverbindung, die zum Beispiel durch ein BUSSystem oder dergleichen gebildet sein kann. Die Daten können eine Klassifikation, eine Entfernung, vertikale Objektgrenzen, eine Quererstreckung und/oder dergleichen umfassen.

Falls ein Objekt für eine Ausblendung beziehungsweise Entblendung relevant ist, weil es als insbesondere weiterer Verkehrsteilnehmer erkannt worden ist, können zwei vertikale Hell-Dunkel-Grenzen mittels Seitenlinien, insbesondere virtueller Seitenlinien, bereitgestellt werden. Die Seitenlinien werden zunächst mittig in Bezug auf die Breite des Objektbereichs, insbesondere zwischen Objektgrenzen des Objekts, positioniert. In einer parametrierbaren Zeit können die Seitenlinien auf einen Wert, beispielsweise gegeben durch eine Objektgrenze plus einem Offset oder dergleichen, nach außen verfahren werden und in einer weiteren, parametrierbaren Zeit von diesen auf einen Wert der Objektgrenze zurückgefahren werden. Durch diese dynamische Bewegung des Hell-Dunkel-Bereichs im Bereich der Fernlichtfunktion erhält der Fahrer unmittelbar die Rückmeldung, dass die Funktionalität bezüglich des Ausblendens beziehungsweise Entblendens aktiviert ist und er kann zugleich visuell nachvollziehen, dass der weitere Verkehrsteilnehmer vorschriftsmäßig ausgeblendet beziehungsweise entblendet worden ist.

Der einstellbare Scheinwerfer ist vorzugsweise ein Pixelscheinwerfer. Ein Pixelscheinwerfer ist ein Scheinwerfer der eine Mehrzahl von Pixeln aufweist, die vorzugsweise individuell Licht abgeben können. Mittels der Scheinwerfersteuerung kann die Lichtabgabe der einzelnen Pixel gesteuert werden. Die Pixel des Pixelscheinwerfers sind vorzugsweise nach Art einer Matrix angeordnet. Ein Pixel ist in der Regel durch ein Leuchtelement gebildet, welches von der Scheinwerfersteuerung individuell hinsichtlich seiner Lichtabgabe gesteuert werden kann. Die Steuerung der Leuchtelemente kann individuell im Wesentlichen unabhängig voneinander erfolgen, sodass nahezu beliebige Lichtverteilungen mittels des Pixelscheinwerfers bereitgestellt werden können. Somit kann eine hochflexible Lichtverteilung bezüglich der Lichtabgabe des Pixelscheinwerfers erreicht werden. Das Leuchtelement kann beispielsweise eine Leuchtdiode, eine Laserdiode, aber dem Grunde nach auch eine Glimmlampe, eine Gasentladungslampe, Kombinationen hiervon oder dergleichen sein. Darüber hinaus können die Pixel des Pixelscheinwerfers auch durch einen Leuchtstoff bereitgestellt sein, der mittels eines Laserlichtstrahls einer Laserlichtquelle punkt- und/oder zeilenweise zur Lichtabgabe aktiviert werden kann. Der Konversionsstoff stellt in diesem Fall die Pixel des Pixelscheinwerfers bereit. Bei einem derartigen Scheinwerfer kann es darüber hinaus vorgesehen sein, dass die Pixel nahezu grenzenlos ineinander übergehen, beispielsweise aufgrund einer entsprechenden Ansteuerung durch den Laser. Ein solcher Scheinwerfer wird auch als Laserscanner bezeichnet.

Der Objektsensor kann eine Kamera, einen Radarsensor, einen Infrarotsensor, Kombinationen hiervon und/oder dergleichen umfassen. Mittels des Objektsensors kann ein Objekt im Bereich der Lichtabgabe erfasst werden. Der Bereich der Lichtabgabe ist ein Bereich, in dem der Scheinwerfer sein Licht abgibt, vorzugsweise ein durch einen Raumwinkel begrenzter Bereich. Insbesondere kann der Objektsensor zumindest den Bereich der Lichtabgabe erfassen. Der Bereich der Lichtabgabe ist ferner dadurch bestimmt, dass er durch den Scheinwerfer mit Licht beaufschlagt werden kann. Darüber hinaus kann jedoch vorgesehen sein, dass der Objektsensor lediglich dann ein Objekt erfasst, welches auf einem Verkehrsweg angeordnet ist, insbesondere einem Verkehrsweg auf dem sich auch das Kraftfahrzeug selbst befindet. Angeordnet im Sinne dieser Offenbarung bedeutet somit nicht nur positioniert, sondern umfasst auch eine zeitliche Veränderung der Position beziehungsweise eine Bewegung.

Der Objektsensor ist vorzugsweise derart ausgebildet, dass mit ihm andere Verkehrsteilnehmer erfasst werden können, vorzugsweise solche, die den Verkehrsweg ebenfalls benutzen. Der Objektsensor ist über eine Kommunikationsverbindung an die Auswerteeinheit angeschlossen, die Sensorsignale des Objektsensors auswertet und ermittelt, ob das Objekt ein Verkehrsteilnehmer ist. Zu diesem Zweck können bekannte Verfahren der Auswertung herangezogen werden, mittels denen zum Beispiel andere Kraftfahrzeuge, Personen, Radfahrer und/oder dergleichen als andere Verkehrsteilnehmer erfasst werden können. Vorzugsweise ist diesbezüglich eine Klassifikation vorgesehen. Die Klassifikation kann zumindest die Klasse Verkehrsteilnehmer und Nicht-Verkehrsteilnehmer umfassen. Darüber hinaus kann die Klassifikation der Verkehrsteilnehmer auch weiter unterteilt werden in Kraftfahrzeuge, Personen, Radfahrer und/oder dergleichen. Der Objektsensor kann auch Daten für eine Objektposition, eine oder mehrere Objektabmessungen bereitstellen, die zu Bilddaten zusammengeführt sein können, mit denen eine entsprechende Verkehrssituation virtuell dargestellt werden kann, sodass sie einer datentechnischen Verarbeitung zugeführt werden kann.

Die Auswerteeinheit liefert ein Auswertesignal an die Scheinwerfersteuerung oder stellt das Steuersignal für den Scheinwerfer unmittelbar bereit. Mittels der Scheinwerfersteuerung kann dann der Scheinwerfer bedarfsgerecht gesteuert werden, um in einem Objektbereich des Objekts ein Entblenden beziehungsweise Ausblenden des Objekts durch Reduzieren der Lichtabgabe erreichen zu können.

Der Objektbereich ist beispielsweise ein Bereich, der durch Abmessungen des Objekts bestimmt ist. Gegebenenfalls kann er auch beispielsweise einen Nahbereich, der einige Zentimeter bis zu einem oder mehreren Metern um das Objekt selbst herum ausgebildet ist, umfassen. Bei Bilddaten kann vorgesehen sein, dass der Objektbereich ergänzend auch einen oder auch mehrere Bildpunkte um das erfasste Objekt herum umfasst. Die Lichtabgabe wird reduziert, wenn das Objekt als Verkehrsteilnehmer erkannt wurde. Die Reduzierung des Lichts beschränkt sich dabei vorzugsweise zumindest auf den Objektbereich. Außerhalb des Objektbereichs kann somit zumindest teilweise weiterhin die Beleuchtungsfunktion gemäß der aktivierten Fernlichtfunktion vorliegen.

Die Breite des Objektbereichs meint insbesondere eine Quererstreckung des Objektbereichs aus Sicht des Kraftfahrzeugs, zum Beispiel waagerecht. Dies kann sich beispielsweise auf die Bilddaten beziehen. Die Breite kann vorzugsweise eine horizontale Breite sein. Sie kann insbesondere von einer Neigung des Kraftfahrzeugs und/oder des Objekts unabhängig sein. Die Quererstreckung kann vorzugsweise horizontale orientiert sein.

Die Vorrichtung der Erfindung ermittelt zwei parallele Seitenlinien mittig in Bezug auf die Breite des Objektbereichs. Vorzugsweise sind die Seitenlinien senkrecht zu einer Orientierung der Breite orientiert. Besonders bevorzugt sind die Seitenlinien jedoch vertikal orientiert. Die Seitenlinien können virtuelle Seitenlinien sein, die dazu dienen, eine Hell-Dunkel-Grenze bezüglich der Lichtabgabe durch den Scheinwerfer zu definieren. Insofern können sie durch entsprechende Daten repräsentiert sein. Anhand der so ermittelten Seitenlinien wird von der Vorrichtung der Erfindung ein Steuersignal an die Scheinwerfersteuerung abgegeben, die dann ihrerseits die Lichtabgabe des Scheinwerfers entsprechend steuert. Dadurch werden den Seitenlinien zugeordnete, visuell erkennbare Hell-Dunkel-Grenzen erzeugt, sodass der Fahrer einen entblendeten beziehungsweise einen ausgeleuchteten Bereich zwischen den Seitenlinien unmittelbar erkennen kann.

Die Erfindung nutzt nun zur Bereitstellung des Effekts der verbesserten Erkennung, dass die beiden parallelen vertikalen Seitenlinien entgegengesetzt zueinander und quer zu ihrer Erstreckung nach außen bis zu einem vorgebbaren Maximalabstand der Seitenlinien voneinander bewegt werden. Der vorgebbare Maximalabstand ist dabei größer als eine Quererstreckung des Objekts beziehungsweise des Objektbereichs, sodass bei Erreichen des Maximalabstands das Objekt zwischen den Seitenlinien positioniert ist. Nach Erreichen des Maximalabstands werden die Seitenlinien sodann entgegengesetzt aufeinander zubewegt, bis die Quererstreckung des Objekts erreicht ist. Die Seitenlinien werden also vom Maximalabstand wieder an das Objekt seitlich herangeführt, bis eine jeweilige seitliche Objektgrenze durch die Seitenlinie erreicht ist. In dem Bereich zwischen den Seitenlinien wird die Lichtabgabe des Scheinwerfers durch Steuerung der Scheinwerfersteuerung entsprechend reduziert, und zwar vorzugsweise auch während der Bewegung der Seitenlinien.

Der Maximalabstand kann zum Beispiel durch eine Fahrbahnbreite einer Fahrbahn vorgegeben sein, auf der sich das Objekt befindet. Dies kann die gleiche Fahrbahn sein, auf der sich auch das Kraftfahrzeug befindet. Die Fahrbahn ist zumindest ein Teil des Verkehrsweges. Es kann vorgesehen sein, dass der Verkehrsweg lediglich eine einzige Fahrbahn umfasst. Darüber hinaus können auch mehrere Fahrbahnen beziehungsweise Fahrspuren vorgesehen sein, auf denen ein Verkehr entweder nur in eine Richtung oder auch in entgegengesetzter Richtung freigegeben ist. Hierbei kann zum Beispiel eine Markierung der Fahrbahn herangezogen werden, um die Fahrbahnbreite ermitteln zu können. Insbesondere kann eine Seitenmarkierung oder auch eine Mittelmarkierung bei zwei Fahrbahnen benutzt werden, um die Fahrbahnbreite zu ermitteln. Darüber hinaus kann zur Ermittlung des Maximalabstands eine Entfernung des Objekts vom Kraftfahrzeug berücksichtig werden, um zum Beispiel eine perspektivische Verschiebung der Fahrbahnbreite berücksichtigen zu können. Dadurch kann vermieden werden, dass die Seitenlinien über Gebühr nach außen bewegt werden und so ein großer, zumindest schlecht beleuchteter Bereich für den Fahrer des Kraftfahrzeuges entsteht. Dadurch dass die Entfernung zum Objekt und seine virtuelle Objektquererstreckung am Ort des Kraftfahrzeuges erfasst wird, kann eine optimierte Verfahrensführung erreicht werden.

Zum Reduzieren der Lichtabgabe im Objektbereich des Objekts ist somit verfahrensseitig vorgesehen, dass zwei parallele vertikale Seitenlinien mittig zum Objekt ermittelt werden, die Seitenlinien entgegengesetzt zueinander und quer zu ihrer Erstreckung nach außen bis zu einem vorgebbaren Maximalabstand der Seitenlinien voneinander bewegt werden, wobei der Maximalabstand größer als eine horizontale Quererstreckung des Objektbereichs ist, nach Erreichen des Maximalabstands die Seitenlinien entgegengesetzt aufeinander zu bewegt werden, bis die Seitenlinien die Quererstreckung des Objektbereichs erreichen, und der Scheinwerfer derart gesteuert wird, dass die Lichtabgabe in einem durch die Seitenlinien seitlich begrenzten Bereich reduziert wird.

Zum Reduzieren der Lichtabgabe im Objektbereich des Objekts kann somit vorrichtungsseitig auch vorgesehen sein, zwei parallele vertikale Seitenlinien mittig zum Objekt zu ermitteln, die Seitenlinien entgegengesetzt zueinander und quer zu ihrer Erstreckung nach außen bis zu einem vorgebbaren Maximalabstand der Seitenlinien voneinander zu bewegen, wobei der Maximalabstand größer als eine horizontale Quererstreckung des Objektbereichs ist, nach Erreichen des Maximalabstands die Seitenlinien entgegengesetzt aufeinander zuzubewegen, bis die Seitenlinien die Quererstreckung des Objektbereichs erreichen, und den Scheinwerfer mittels des Steuersignals derart zu steuern, dass in einem durch die Seitenlinien seitlich begrenzten Bereich die Lichtabgabe reduziert ist.

Vorzugsweise erfolgt das Bewegen der Seitenlinien in einem vorgebbaren Zeitraum. Der vorgebbare Zeitraum kann zum Beispiel etwa 0,5 s, etwa 0,8 s, etwa 1 s oder auch mehr betragen. Vorzugsweise ist der vorgebbare Zeitraum jedoch kleiner als etwa 2 s, insbesondere kleiner als etwa 1,5 s.

Gemäß einer vorteilhaften Weiterbildung wird vorgeschlagen, dass der Zeitraum abhängig von einer Entfernung zwischen dem Kraftfahrzeug und dem Objekt und/oder einer Differenzgeschwindigkeit zwischen dem Kraftfahrzeug und dem Objekt vorgegeben wird. Dadurch können spezifische Besonderheiten während des bestimmungsgemäßen Betriebes besser genutzt werden. So kann vorgesehen sein, dass der vorgebbare Zeitraum bedarfsgerecht während des bestimmungsgemäßen Betriebes des Kraftfahrzeuges angepasst werden kann, vorzugsweise bezüglich einer jeweiligen Entblendungsbeziehungsweise Ausblendungsfunktion.

Weiterhin wird vorgeschlagen, dass die Seitenlinien schneller nach außen als nach innen bewegt werden. So kann vorgesehen sein, dass die Seitenlinien während eines sehr kurzen Zeitraums von der mittigen Position des Objekts nach außen zum Maximalabstand bewegt werden, beispielsweise in einer Zeit, die kleiner ist als etwa 0,4 s, vorzugsweise kleiner als etwa 0,2 s.

Vom Maximalabstand können die Seitenlinien dann vorzugsweise langsamer nach innen bewegt werden, beispielsweise in einem Zeitraum, der größer ist als etwa 0,2 s, vorzugsweise größer als etwa 0,3 s. Dadurch kann eine dynamisch gut erkennbare Entblendungsfunktion für den Fahrer erreicht werden. Es kann darüber hinaus vorgesehen sein, dass die Geschwindigkeiten des Bewegens der Seitenlinien individuell eingestellt werden können, sodass der Fahrer sie für seine persönlichen Bedürfnisse die Funktion bedarfsgerecht anpassen kann.

Eine Weiterbildung schlägt vor, dass eine Ausrichtung der Seitenlinien mittig zum Objekt aktualisiert wird. Durch die Aktualisierung kann erreicht werden, dass eine Veränderung hinsichtlich der relativen Position des Objekts gegenüber dem Kraftfahrzeug besser berücksichtigt werden kann und auf diese Weise der ausgeblendete Bereich beziehungsweise der entblendete Bereich an die aktuelle Situation besser angepasst werden kann. Dadurch kann eine verbesserte Entblendung beziehungsweise Ausblendung bezüglich der weiteren Verkehrsteilnehmer erreicht werden.

Vorzugsweise wird der Scheinwerfer derart gesteuert, dass das Licht ausschließlich außerhalb des Bereichs zwischen den Seitenlinien abgegeben wird. Zwischen den Seitenlinien wird in dieser Ausgestaltung kein Licht abgegeben, sodass eine ausgesprochen günstige Entblendung beziehungsweise Ausblendung des weiteren Verkehrsteilnehmers erreicht werden kann. Ansonsten kann auch vorgesehen sein, dass im Bereich zwischen den Seitenlinien zum Beispiel eine Abblendlichtfunktion realisiert ist.

Die bezüglich des erfindungsgemäßen Verfahrens angegebenen Wirkungen und Vorteile gelten gleichermaßen für die erfindungsgemäße Vorrichtung sowie das mit er erfindungsgemäßen Vorrichtung ausgerüstete Fahrerassistenzsystem sowie das mit der erfindungsgemäßen Vorrichtung beziehungsweise dem erfindungsgemäßen Fahrerassistenzsystem ausgerüstete Kraftfahrzeug und umgekehrt. Somit können für Verfahrensmerkmale auch Vorrichtungsmerkmale und umgekehrt formuliert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung einer Bewegung von Seitenlinien von einer mittigen Position eines als Verkehrsteilnehmer erfassten Objekts nach Außen bis zu einem Maximalabstand gemäß der Erfindung;
- Fig. 2: eine Darstellung wie Fig. 1, bei der die Seitenlinien vom Maximalabstand wieder nach innen zum Objekt bewegt werden; und
- Fig. 3: eine Darstellung wie Fig. 2, bei der die Seitenlinien horizontale Objektgrenzen des Objekts erreicht haben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

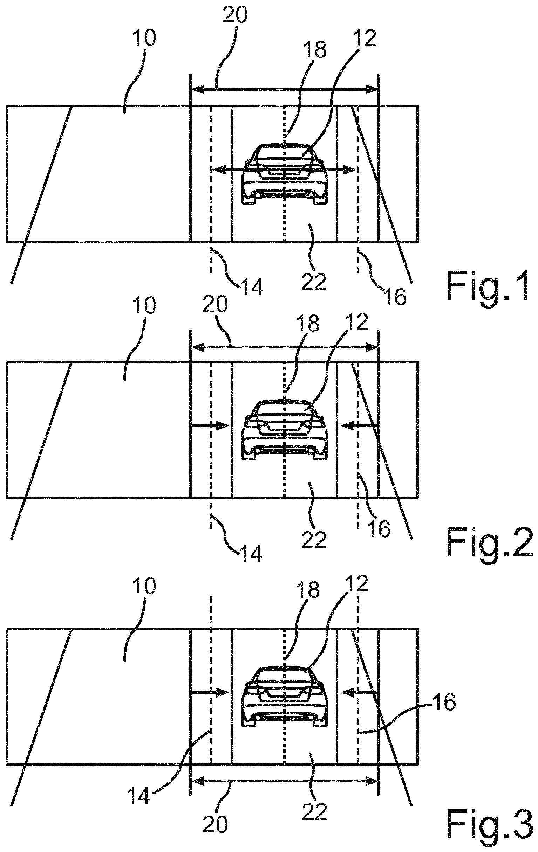

Fig. 1 zeigt in einer schematischen Darstellung ein vorausfahrendes Kraftfahrzeug 12 als Objekt auf einer Fahrbahn 22 einer nicht weiter bezeichneten Straße als Verkehrsweg. Ein eigenes Kraftfahrzeug, welches von einem Fahrer des Kraftfahrzeuges ebenfalls auf der Fahrbahn 22 hinter dem Kraftfahrzeug geführt ist, ist in den Figuren nicht dargestellt.

Das eigene Kraftfahrzeug weist als Scheinwerfer einen ebenfalls nicht dargestellten Pixelscheinwerfer auf, der mittels einer ebenfalls nicht dargestellten Scheinwerfersteuerung hinsichtlich seiner Lichtabgabe gesteuert wird. Vorliegend wird der Pixelscheinwerfer derart gesteuert, dass der Pixelscheinwerfer Licht 10 gemäß einer aktivierten Fernlichtfunktion abgibt. Das Licht 10 weist hierzu eine entsprechende Lichtverteilung auf.

Mittels einer nicht dargestellten Kamera des eigenen Kraftfahrzeuges, die vorliegend als Objektsensor dient, wird das Kraftfahrzeug 12 im Bereich der Lichtabgabe des Lichts 10 erfasst. Die Kamera ist an eine ebenfalls nicht dargestellte Auswerteeinheit des eigenen Kraftfahrzeuges angeschlossen, die ermittelt, ob das Objekt 12 ein Verkehrsteilnehmer ist. Vorliegend ermittelt die Auswerteeinheit, dass es sich bei dem Objekt um das Kraftfahrzeug 12 handelt.

Die Auswerteinheit ist an eine Scheinwerfersteuerung angeschlossen, mittels der die Lichtabgabe des Lichts 10 durch den Pixelscheinwerfer gesteuert werden kann. Entsprechend eines Steuersignals wird die Lichtabgabe durch den Pixelscheinwerfer in einem Objektbereich des Kraftfahrzeuges 12 zum Entblenden des Kraftfahrzeuges 12 reduziert.

Zum Reduzieren der Lichtabgabe im Bereich des Kraftfahrzeuges 12 werden zunächst zwei parallele vertikale Seitenlinien 14, 16 mittig zum Kraftfahrzeug 12 ermittelt, die vorliegend virtuelle Seitenlinien sind. Die Seitenlinien 14, 16 dienen dazu, Hell-Dunkel-Grenzen im Bereich der Lichtabgabe durch den Pixelscheinwerfer vorgeben zu können. Entsprechend wird von der Auswerteeinheit das Steuersignal an die Scheinwerfersteuerung abgegeben. Dabei wird der Pixelscheinwerfer mittels der Scheinwerfersteuerung derart gesteuert, dass in einem Bereich zwischen den Seitenlinien 14, 16 die Lichtabgabe des Lichts 10 reduziert wird. Vorliegend ist vorgesehen, dass in diesem Bereich zwischen den Seitenlinien 14, 16 kein Licht abgegeben wird.

Sodann werden die Seitenlinien 14, 16 entgegengesetzt zueinander und quer zu ihrer Erstreckung nach außen bis zu einem vorgebbaren Maximalabstand 20 der Seitenlinien 14, 16 voneinander bewegt. Der Maximalabstand 20 ist dabei größer als eine Quererstreckung des Kraftfahrzeuges 12. Vorliegend ist vorgesehen, dass der Maximalabstand 20 einer Fahrbahnbreite der Fahrbahn 22 im Bereich der Position des Kraftfahrzeuges 12 entspricht. Darüber hinaus können natürlich für den Maximalabstand 20 auch andere Maßstäbe vorgeben sein. Die Breite der Fahrbahn 22 im Bereich der Position des Kraftfahrzeuges 12 kann ebenfalls mittels der Auswerteeinheit ermittelt werden.

Fig. 2 zeigt die Bewegung der Seitenlinien 14, 16 von ihrem Maximalabstand 20 nach innen. Dadurch, dass durch die Seitenlinien 14, 16 Hell-Dunkel-Grenzen der Lichtabgabe des Lichts 10 durch den Pixelscheinwerfer bestimmen, wird für den Fahrer visuell eine Dunkelzone im Bereich des Kraftfahrzeuges 12 erkennbar. Durch die Bewegung der Seitenlinien 14, 16 ist zugleich auch die entsprechende zugeordnete Hell-Dunkel-Grenze bewegt, sodass dies für den Fahrer des eigenen Kraftfahrzeuges unmittelbar erkennbar ist.

Nach Erreichen des Maximalabstands 20 durch die Seitenlinien 14, 16 werden diese entgegengesetzt aufeinander zubewegt, bis eine Quererstreckung des Kraftfahrzeuges 12 erreicht ist. Dies ist in Fig. 3 dargestellt.

In der vorliegenden Ausgestaltung ist vorgesehen, dass als Zeitraum für das Bewegen der Seitenlinien 14, 16 etwa 0,5 s vorgesehen sind. Dabei ist ferner vorgesehen, dass sich die Seitenlinien 14, 16 schneller nach außen als nach innen bewegen. Vorliegend werden die Seitenlinien 14, 16 innerhalb von etwa 0,2 s nach außen bewegt. Die Bewegung nach innen schließt sich dann unmittelbar an und erfolgt in einem Zeitraum von etwa 0,4 s.

Das Verfahren der Erfindung wird permanent wiederholt, sodass Veränderungen hinsichtlich der relativen Positionierung des Kraftfahrzeuges nachgeführt werden können. Dadurch kann die Entblendungsfunktion beziehungsweise die Ausblendungsfunktion auch bei relativen Änderungen permanent zuverlässig gewährleistet werden. So kann vorgesehen sein, dass das Ermitteln der vertikalen Mittellinie 18 des Kraftfahrzeuges 12 permanent in einem Rhythmus von etwa 0,1 s oder auch mehr, beispielsweise etwa 0,2 s, wiederholt wird. Dabei kann vorgesehen sein, dass die Verfahrensführung gemäß der Erfindung lediglich durch Anpassen der Mittellinie 18 insgesamt angepasst wird und ansonsten jedoch im Sinne der erfindungsgemäßen Verfahrensführung fortgeführt wird.

Darüber hinaus kann natürlich auch vorgesehen sein, insbesondere wenn sich ein relativer Abstand zwischen dem eigenen Kraftfahrzeug und dem Kraftfahrzeug 12 ändert und das Kraftfahrzeug 12 somit beispielsweise einen größeren oder einen kleineren Bereich der Ausblendung erfordert, die Verfahrensführung entsprechend angepasst wird. Dies kann beispielsweise in einem Rhythmus von etwa 0,6 s oder mehr, beispielsweise etwa 0,8 s oder etwa 1 s, oder dergleichen durchgeführt werden. Dadurch kann erreicht werden, dass einerseits die Entblendungsfunktion beziehungsweise Ausblendungsfunktion nach wie vor gewährleistet ist, wobei andererseits zugleich das Entblenden beziehungsweise das Ausblenden nur soweit erfolgt, wie es für das Kraftfahrzeug 12 erforderlich ist. Dadurch können unnötige Beschränkungen der Beleuchtung hinsichtlich des Fahrers des eigenen Kraftfahrzeuges weitgehend reduziert werden.

Insgesamt können die Auswerteinheit und gegebenenfalls auch die Scheinwerfersteuerung zumindest teilweise durch eine Rechnereinheit gebildet sein. Die Rechnereinheit wird mittels eines Rechnerprogramms derart gesteuert, dass sie die gewünschte Funktionalität bereitzustellen vermag. Darüber hinaus kann natürlich auch vorgesehen sein, dass zumindest teilweise eine Hardwareschaltung vorgesehen ist, die die gewünschte Funktionalität zumindest teilweise bereitstellt. Die Hardwareschaltung kann natürlich auch mit einer Rechnereinheit kombiniert sein. Insbesondere können natürlich die Scheinwerfersteuerung, die Auswerteeinheit sowie auch die Vorrichtung gemäß der Erfindung zumindest teilweise in eine übergeordnete Fahrzeugsteuerung des Kraftfahrzeuges integriert sein.

Schließlich ist es auch möglich, den Objektsensor, die Auswerteinheit, die Vorrichtung gemäß der Erfindung und weitere Komponenten in unterschiedlichsten Art und Weisen miteinander integriert auszubilden, um so zu bedarfsgerechten Einheiten zur Integration in das Kraftfahrzeug beziehungsweise in das Fahrerassistenzsystem gelangen zu können.

Insgesamt zeigen die Beispiele, wie durch die Erfindung eine verbesserte Funktionalität des Entblendens beziehungsweise des Ausblendens bei einer aktivierten Fernlichtfunktion für den Fahrer eines Kraftfahrzeuges erreicht werden kann.

Die Ausführungsbeispiele dienen lediglich der Erläuterung der Erfindung und sollen diese nicht beschränken.

## Patentansprüche

1. Verfahren zum Steuern eines Scheinwerfers eines Kraftfahrzeugs, bei dem mittels des Scheinwerfers bei einer aktivierten Fernlichtfunktion Licht (10) gemäß einer einem Fernlicht entsprechenden Lichtverteilung abgegeben wird, wobei
- mittels eines Objektsensors ein Objekt (12) in einem Bereich der Lichtabgabe erfasst wird,
- mittels einer Auswerteeinheit ermittelt wird, ob das Objekt (12) ein Verkehrsteilnehmer ist, und
- nur wenn das Objekt (12) ein Verkehrsteilnehmer ist, die Lichtabgabe in einem Objektbereich des Objekts (12) reduziert wird,
**dadurch gekennzeichnet, dass**
zum Reduzieren der Lichtabgabe im Objektbereich des Objekts (12)
- eine Breite des Objektbereichs ermittelt wird,
- zwei parallele Seitenlinien (14, 16) mittig in Bezug auf die Breite ermittelt werden, die dazu dienen, vertikale Hell-Dunkel-Grenzen bereitzustellen, um eine Hell-Dunkel-Grenze bezüglich der Lichtabgabe durch den Scheinwerfer zu definieren,
- die Seitenlinien (14, 16) entgegengesetzt zueinander und quer zu ihrer Erstreckung nach außen bis zu einem vorgebbaren Maximalabstand (20) der Seitenlinien (14, 16) voneinander bewegt werden, wobei der Maximalabstand (20) größer als die Breite des Objektbereichs ist,
- nach Erreichen des Maximalabstands (20) die Seitenlinien (14, 16) entgegengesetzt aufeinander zu bewegt werden, bis die Seitenlinien (14, 16) die Breite des Objektbereichs erreichen, und
- der Scheinwerfer derart gesteuert wird, dass die Lichtabgabe in einem durch die Seitenlinien (14, 16) seitlich begrenzten Bereich reduziert wird.

2. Verfahren nach Anspruch 1,
**dadurch gekennzeichnet, dass**
der Maximalabstand (20) durch eine Fahrbahnbreite einer Fahrbahn (22) vorgegeben wird, auf der sich das Objekt (12) befindet.

3. Verfahren nach einem der vorhergehenden Ansprüche,
**dadurch gekennzeichnet, dass**
das Bewegen der Seitenlinien (14, 16) in einem vorgebbaren Zeitraum erfolgt.

4. Verfahren nach Anspruch 3,
**dadurch gekennzeichnet, dass**
der Zeitraum abhängig von einer Entfernung zwischen dem Kraftfahrzeug und dem Objekt (12) und/oder einer Differenzgeschwindigkeit zwischen dem Kraftfahrzeug und dem Objekt (12) vorgegeben wird.

5. Verfahren nach einem der vorhergehenden Ansprüche,
**dadurch gekennzeichnet, dass**
die Seitenlinien (14, 16) schneller nach außen als nach innen bewegt werden.

6. Verfahren nach einem der vorhergehenden Ansprüche,
**dadurch gekennzeichnet, dass**
eine Ausrichtung der Seitenlinien (14, 16) mittig zum Objekt (12) aktualisiert wird.

7. Verfahren nach einem der vorhergehenden Ansprüche,
**dadurch gekennzeichnet, dass**
der Scheinwerfer derart gesteuert wird, dass das Licht (10) ausschließlich außerhalb des Bereichs zwischen den Seitenlinien (14, 16) abgegeben wird.

8. Vorrichtung zum Steuern eines Scheinwerfers eines Kraftfahrzeugs, wobei die Vorrichtung ausgebildet ist, ein Steuersignal für den Scheinwerfer bereitzustellen, damit der Scheinwerfer bei einer aktivierten Fernlichtfunktion Licht (10) gemäß einer einem Fernlicht entsprechenden Lichtverteilung abgibt, wobei die Vorrichtung ferner ausgebildet ist,
- mittels eines Sensorsignals eines Objektsensors ein Objekt (12) in einem Bereich der Lichtabgabe zu erfassen,
- mittels einer Auswerteeinheit zu ermitteln, ob das Objekt (12) ein Verkehrsteilnehmer ist, und
- nur wenn das Objekt (12) ein Verkehrsteilnehmer ist, ein Steuersignal an den Scheinwerfer abzugeben, um die Lichtabgabe in einem Objektbereich des Objekts (12) zu reduzieren,
**dadurch gekennzeichnet, dass**
die Vorrichtung weiterhin ausgebildet ist, zum Reduzieren der Lichtabgabe im Objektbereich des Objekts (12)
- eine Breite des Objektbereichs zu ermitteln,
- zwei parallele Seitenlinien (14, 16) mittig in Bezug auf die Breite zu ermitteln, die dazu dienen, vertikale Hell-Dunkel-Grenzen bereitzustellen, um eine Hell-Dunkel-Grenze bezüglich der Lichtabgabe durch den Scheinwerfer zu definieren,
- die Seitenlinien (14, 16) entgegengesetzt zueinander und quer zu ihrer Erstreckung nach außen bis zu einem vorgebbaren Maximalabstand (20) der Seitenlinien (14, 16) voneinander zu bewegen, wobei der Maximalabstand (20) größer als die Breite des Objektbereichs ist,
- nach Erreichen des Maximalabstands (20) die Seitenlinien (14, 16) entgegengesetzt aufeinander zuzubewegen, bis die Seitenlinien (14, 16) die Breite des Objektbereichs erreichen, und
- den Scheinwerfer mittels des Steuersignals derart zu steuern, dass in einem durch die Seitenlinien (14, 16) seitlich begrenzten Bereich die Lichtabgabe reduziert ist.

9. Fahrerassistenzsystem für ein Kraftfahrzeug,
**gekennzeichnet durch**
eine Vorrichtung nach Anspruch 8.

10. Kraftfahrzeug,
**gekennzeichnet durch**
eine Vorrichtung nach Anspruch 8 oder ein Fahrerassistenzsystem nach Anspruch 9.

## Claims

1. Method for controlling a headlight of a motor vehicle when a full beam function is activated, wherein light (10) is emitted by means of the headlight, in accordance with a light distribution corresponding to a full beam, wherein
- an object (12) is sensed by means of an object sensor in a region of the light output,
- an evaluation unit determines whether the object (12) is a road user, and
- only if the object (12) is a road user, the light output is reduced in an object region of the object (12), **characterised in that**, in order to reduce the light output in the object region of the object (12)
- a width of the object region is determined,
- two parallel sidelines (14, 16) are determined centrally with respect to the width, which are used to provide vertical light-dark boundaries, in order to define a light-dark boundary relative to the light output by the headlight.
- the sidelines (14, 16) are moved outwards in opposite directions to each other and transversely to their extent to a predeterminable maximum distance (20) of the sidelines (14, 16) from each other, wherein the maximum distance (20) is greater than the width of the object region,
- after reaching the maximum distance (20), the sidelines (14, 16) are moved towards each other, until the sidelines (14, 16) reach the width of the object region, and
- the headlight is controlled such that the light output is reduced in a region bounded laterally by the sidelines (14, 16).

2. Method according to claim 1, **characterised in that** the maximum distance (20) is predetermined by a lane width of a carriageway (22), on which the object (12) is situated.

3. Method according to any of the preceding claims, **characterised in that** the movement of the sidelines (14, 16) takes place within a predeterminable period.

4. Method according to claim 3, **characterised in that** the period is predetermined depending on a distance between the motor vehicle and the object (12) and/or a differential speed between the motor vehicle and the object (12).

5. Method according to any of the preceding claims, **characterised in that** the sidelines (14, 16) are moved more rapidly outwards than inwards.

6. Method according to any of the preceding claims, **characterised in that** an alignment of the sidelines (14, 16) is updated centrally to the object (12).

7. Method according to any of the preceding claims, **characterised in that** the headlight is controlled such that the light (10) is only emitted outside the region between the sidelines (14, 16).

8. Device for controlling a headlight of a motor vehicle, wherein the device is designed to provide a control signal for the headlight, in order that, when a full beam function is activated, the headlight emits light (10) in accordance with a light distribution corresponding to a full beam, wherein the device is further designed,
- to sense an object(12) in a region of the light output by means of a sensor signal from an object sensor,
- to determine whether the object (12) is a road user by means of an evaluation unit, and
- only if the object (12) is a road user, to send a control signal to the headlight, in order to reduce the light output in an object region of the object (12), **characterised in that** the device is further designed to reduce the light output in the object region of the object (12)
- to determine a width of the object region,
- to determine two parallel sidelines (14, 16) centrally with respect to the width, which are used to provide vertical light-dark boundaries, in order to define a light-dark boundary relative to the light output by the headlight,
- to move the sidelines (14, 16) outwards in opposite directions to each other and transversely to their extent to a predeterminable maximum distance (20) of the sidelines (14, 16) from each other, wherein the maximum distance (20) is greater than the width of the object region,
- after reaching the maximum distance (20) to move the sidelines (14, 16) towards each other, until the sidelines (14, 16) reach the width of the object region, and
- to control the headlight by means of the control signal such that the light output is reduced in a region bounded laterally by the sidelines (14, 16).

9. Driver assistance system for a motor vehicle, **characterised by** a device according to claim 8.

10. Motor vehicle, **characterised by** a device according to claim 8 or a driver assistance system according to claim 9.

## Revendications

1. Procédé de commande d'un phare d'un véhicule automobile, dans lequel une lumière (10) est émise au moyen du phare lorsqu'une fonction de feux de route est activée conformément à une distribution de lumière correspondant à des feux de routes, dans lequel
- un objet (12) est détecté dans une zone de l'émission de lumière au moyen d'un capteur d'objet,
- il est déterminé au moyen d'une unité d'évaluation, si l'objet (12) est un usager de la route, et
- seulement si l'objet (12) est un usager de la route, l'émission de lumière est réduite dans une zone d'objet de l'objet (12),
**caractérisé en ce que**
pour la réduction de l'émission de lumière dans la zone d'objet de l'objet (12)
- une largeur de la zone d'objet est déterminée,
- deux lignes latérales parallèles (14, 16) sont déterminées au milieu par rapport à la largeur, qui servent à mettre à disposition des limites clair-sombre verticales, afin de définir une limite clair-sombre par rapport à l'émission de lumière par le phare,
- les lignes latérales (14, 16) sont déplacées dans le sens opposé l'une par rapport à l'autre et transversalement à leur extension vers l'extérieur jusqu'à une distance maximum (20) pouvant être prédéfinie des lignes latérales (14, 16) l'une de l'autre, dans lequel la distance maximum (20) est plus grande que la largeur de la zone d'objet,
- après l'atteinte de la distance maximum (20), les lignes latérales (14, 16) sont déplacées dans le sens opposé l'une vers l'autre, jusqu'à ce que les lignes latérales (14, 16) atteignent la largeur de la zone d'objet, et
- le phare est commandé de sorte que l'émission de lumière est réduite dans une zone limitée latéralement par les lignes latérales (14, 16).

2. Procédé selon la revendication 1,
**caractérisé en ce que**
la distance maximum (20) est prédéfinie par une largeur de chaussée d'une chaussée (22), sur laquelle se trouve l'objet (12).

3. Procédé selon l'une quelconque des revendications précédentes,
**caractérisé en ce que**
le déplacement des lignes latérales (14, 16) a lieu dans une période de temps pouvant être prédéfinie.

4. Procédé selon la revendication 3,
**caractérisé en ce que**
la période de temps est prédéfinie en fonction d'une distance entre le véhicule automobile et l'objet (12) et/ou d'une vitesse différentielle entre le véhicule automobile et l'objet (12).

5. Procédé selon l'une quelconque des revendications précédentes,
**caractérisé en ce que**
les lignes latérales (14, 16) sont déplacées plus rapidement vers l'extérieur que vers l'intérieur.

6. Procédé selon l'une quelconque des revendications précédentes,
**caractérisé en ce que**
une orientation des lignes latérales (14, 16) est actualisée au milieu de l'objet (12).

7. Procédé selon l'une quelconque des revendications précédentes,
**caractérisé en ce que**
le phare est commandé de sorte que la lumière (10) est émise exclusivement à l'extérieur de la zone entre les lignes latérales (14, 16).

8. Dispositif de commande d'un phare d'un véhicule automobile, dans lequel le dispositif est réalisé pour mettre à disposition un signal de commande pour le phare pour que le phare émette une lumière (10) lorsqu'une fonction de feux de route est activée conformément à une distribution de lumière correspondant à des feux de routes, dans lequel le dispositif est réalisé en outre
- pour détecter un objet (12) dans une zone de l'émission de lumière au moyen d'un signal de capteur d'un capteur d'objet,
- pour déterminer au moyen d'une unité d'évaluation, si l'objet (12) est un usager de la route, et
- seulement si l'objet (12) est un usager de la route, pour émettre un signal de commande au phare pour réduire l'émission de lumière dans une zone d'objet de l'objet (12),
**caractérisé en ce que**
le dispositif est réalisé en outre pour réduire l'émission de lumière dans la zone d'objet de l'objet (12)
- pour déterminer une largeur de la zone d'objet,
- pour déterminer deux lignes latérales parallèles (14, 16) au milieu par rapport à la largeur, qui servent à mettre à disposition des limites clair-sombre verticales, afin de définir une limite clair-sombre par rapport à l'émission de lumière par le phare,
- pour déplacer les lignes latérales (14, 16) dans le sens opposé l'une par rapport à l'autre et transversalement à leur extension vers l'extérieur jusqu'à une distance maximum (20) pouvant être prédéfinie des lignes latérales (14, 16) l'une de l'autre, dans lequel la distance maximum (20) est plus grande que la largeur de la zone d'objet,
- après l'atteinte de la distance maximum (20), pour déplacer les lignes latérales (14, 16) dans le sens opposé l'une vers l'autre, jusqu'à ce que les lignes latérales (14, 16) atteignent la largeur de la zone d'objet, et
- pour commander le phare au moyen du signal de commande de sorte que l'émission de lumière est réduite dans une zone limitée latéralement par les lignes latérales (14, 16).

9. Système d'assistance au conducteur pour un véhicule automobile,
**caractérisé par**
un dispositif selon la revendication 8.

10. Véhicule automobile,
**caractérisé par**
un dispositif selon la revendication 8 ou un système d'assistance au conducteur selon la revendication 9.
